Europäisches Patentamt

European Patent Office

Office européen des brevets

(11) Publication number: **0 193 812**
A2

# EUROPEAN PATENT APPLICATION

(12)

(21) Application number: 86102279.6

(22) Date of filing: 21.02.86

(51) Int. Cl.⁴: **B 23 K 37/04,** B 23 K 37/02

---

(30) Priority: 04.03.85 US 708038

(43) Date of publication of application: 10.09.86
Bulletin 86/37

(84) Designated Contracting States: DE FR GB IT NL

(71) Applicant: CRC Pipeline International, Inc., 3200 First
City Bank Tower, 201 Main Street, Forth Worth,
Texas 76102 (US)

(72) Inventor: Ward, Gerald Wayne, 2212 South Erie Place,
Tulsa Oklahoma 74114 (US)
Inventor: Campbell, Wallace Clealon, Jr.,
1632 South 119 East Avenue, Tulsa Oklahoma 74128 (US)

(74) Representative: UEXKÜLL & STOLBERG Patentanwälte,
Beselerstrasse 4, D-2000 Hamburg 52 (DE)

---

(54) Internal pipe clamp for inert gas welding.

(57) An internal pipe clamp (10) is disclosed which has integral seals (52, 54) for providing an enclosed volume (20) within the abutting pipe sections (12, 14) to be welded. The oxygen can be purged from the enclosed volume (20) to provide an inert atmosphere at the weld site for an improved weld with alloys such as stainless steel. The internal pipe clamp (10) is preferably employed with a pulse MIG welding technique and greatly decreases the time necessary to prepare and weld abutting pipe sections. The seals (52, 54) in their relaxed state permits the clamp (10) to be moved freely within the pipes. When inflated, the seals deform to seal between the inner surface of a pipe and the frame of the clamp (10) to isolate the enclosed volume (20).

# INTERNAL PIPE CLAMP FOR INERT GAS WELDING

TECHNICAL FIELD

This invention relates to the welding of pipe, and in particular to the alignment of abutting ends of pipes to be welded with an inert gas environment surrounding the weld.

## BACKGROUND OF THE INVENTION

In the construction of pipeline, it is common to position one end of a pipe section at the end of the pipeline under constuction and weld the abutting ends together so that the pipe section becomes part of the pipeline. By moving the welding equipment along the pipeline as it is constructed, any desired length of pipeline can be created. However, one of the difficult problems in this type of operation is to ensure that the abutting ends of the pipe section and pipeline are properly positioned for welding. The center line of both the pipeline and pipe section at the weld must coincide. In addition, the ends of the pipeline and pipe section must be precisely aligned to perform the weld.

In the past, both internal and external clamps have been used to align and clamp the pipe for welding. Internal clamps are preferred. U.S. Patent No. 3,445,104, issued to E.H. Douglas on May 20, 1969, illustrates one example of an internal pipe clamp. In this device, two rings of clamp shoes are mounted on the clamp. The rings are spaced apart a predetermined distance along the length of the clamp. Each ring of shoes can be moved radially outward to clamp against the inner surface of a pipe section. The clamp is positioned within the pipe sections to be welded at the abutting ends of the pipe sections and each ring of shoes will be urged against the inner surface of a pipe section, drawing the abutting ends of the pipe into alignment for welding.

In welding pipe of certain alloys, including for example stainless steel, the weld must be made in an oxygen free environment. Stainless steel, and certain other alloys, oxidize when heated to the temperatures used in welding. If such oxidization occurs, the pipe will fail in service much more rapidly because of the corrosion than if the pipe were welded in an oxygen free environment.

In order to provide for the welding of pipe in a pipeline in an oxygen free environment, a technique has been developed where inflatable bladders are positioned within each of the pipe sections to be welded to define an enclosed volume within the pipe sections. Such bladders are available from Sloan Purge Products, Co., Inc. of 3112 Antonino Avenue, Bakersfield, California 93308. This volume can be purged with an inert gas, such as argon, which replaces the oxygen rich atmosphere and permits the weld to be made by welding equipment outside the pipe. The welding is typically a TIG technique (Tungsten Inert Gas). The pipe sections are aligned and clamped by an external clamping mechanism.

While this technique will create adequate welds, the process is very time consuming and thus very costly. The volume between the inflatable bladders is quite large and requires a substantial time in order to be fully purged of oxygen. Futhermore, the TIG welding method is very slow. Therefore, a need exists for a improvement in the art which will permit oxygen free welding to be completed more rapidly.

SUMMARY OF THE INVENTION

In accordance with one aspect of the present invention, an apparatus is provided for use when welding the abutting ends of a first and second pipe. The apparatus includes a frame and first pipe clamping structure mounted on the frame for engaging the first pipe about the inner periphery of the first pipe proximate the end to be welded. A second pipe clamping structure is mounted on the frame for engaging the second pipe about the inner periphery of the second pipe proximate the end to be welded. The first and second pipe clamping structures engage the first and second pipes to align the abutting ends for welding. Seal structure is mounted on the frame for forming a seal between the frame and the inner periphery of the first and second pipes to form an enclosed volume at the abutting ends of the pipe. Structure is provided to purge the oxygen from the enclosed volume.

In accordance with another aspect of the present invention, the seal structure is formed of first and second annular seals. The seals are mounted on the frame and each seal is formed of a resilient material. Each of the seals has a hollow core and structure for entry and removal of a pressurized gas in the hollow core. The shape of the relaxed seals when pressurized gas is not present in the hollow core permits the apparatus to be moved within the pipe. Entry of a pressurized gas in the hollow core of the first seal causes the first seal to deform into sealing contact with the frame and the inner periphery of the first pipe. Entry of pressurized gas in the hollow core of the second seal causes the second seal to deform into sealing contact with the frame and inner periphery of the second pipe.

In accordance with another aspect of the invention, the oxygen is purged from the enclosed volume by argon gas to provide an inert environment for welding.

BRIEF DESCRIPTION OF THE DRAWINGS

A more complete understanding of the invention can be had by referring to the following Detailed Description together with the accompanying Drawings, wherein:

FIGURE 1 is a side view of an internal pipe clamp which forms an embodiment of the present invention having integral seals for isolating an enclosed volume about the abutting ends of pipe to be welded from which the oxygen can be purged;

FIGURE 2 is an illustrative view of the pipe clamp with a first set of clamping shoes extended to clamp to one of the pipes being welded;

FIGURE 3 is an illustrative view of the second set of clamping shoes extended to clamp the other pipe to be welded and the first and second seals inflated to seal between the frame of the pipe clamp and the inner periphery of both pipes to be welded;

FIGURE 4 is a schematic illustrating the pneumatically operated functions of the pipe clamp;

FIGURE 5 is a cross sectional view of a portion of a seal and the supporting structure on the clamp; and

FIGURE 6 is a cross sectional view of an alternate seal which can be employed in the pipe clamp.

DETAILED DESCRIPTION

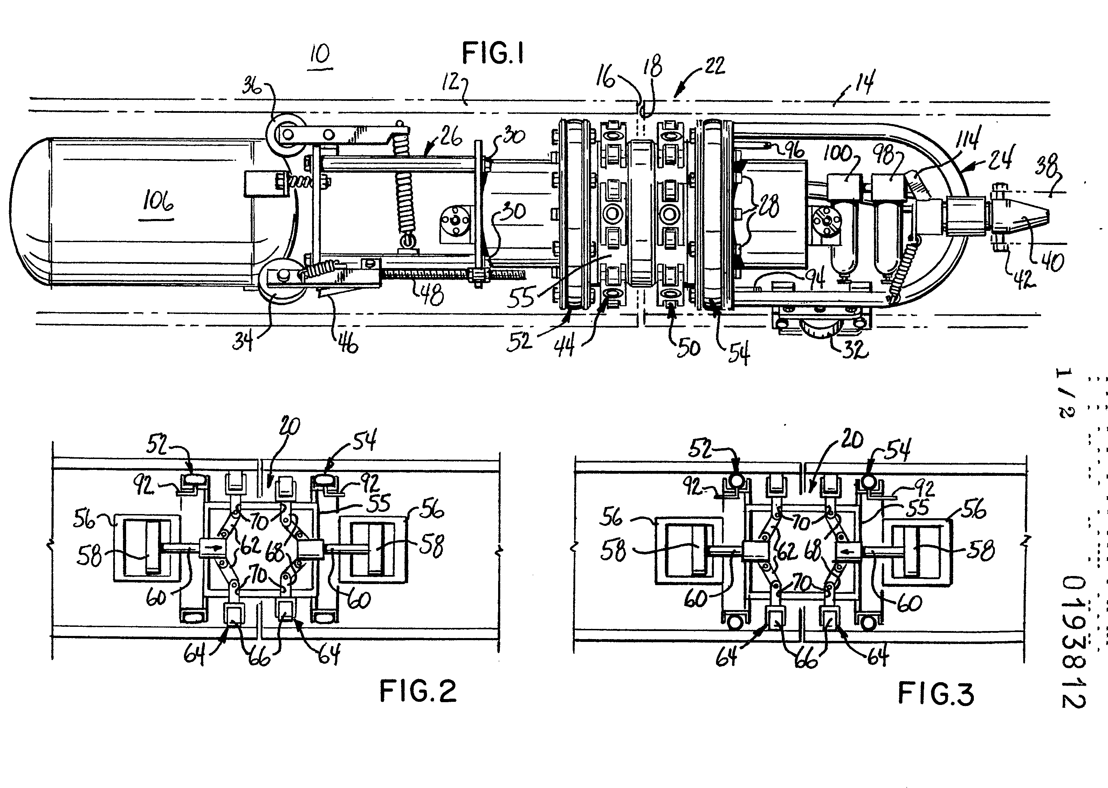

With reference now to the drawings, wherein like reference numerals designate like or corresponding parts throughout the several views, and in particular to FIGURES 1-5, there is shown a internal pipe clamp 10 forming one embodiment of the present invention.

One function of the internal pipe clamp 10 is to clamp a first pipe section 12 and a second pipe section 14 with their abutting ends 16 and 18 in proper orientation for welding the pipe sections together. While ends 16 and 18 are shown with a gap therebetween for illustrative purposes in the figures, clamp 10 will usually clamp the pipe sections with no gap between ends 16 and 18. Typically, one of the pipe sections 12 and 14 will be one end of a pipeline which is under construction. The other pipe section will thus become part of the pipeline when the pipe sections are welded together.

A second function of the internal pipe clamp 10 is to isolate an enclosed volume 20 of generally annular shape inside the pipe sections at the abutting ends. The pipe clamp 10 also provides structure whereby the oxygen can be purged from the enclosed volume 20, preferrably by displacing the oxygen from the volume by providing argon gas to the enclosed volume from an exterior supply. The inside of the abutting ends 16 and 18 is therefore exposed to an inert atmosphere which can greatly increase the effectiveness of the weld, particularly on certain alloys such as stainless steel.

The pipe clamp 10 will typically be used with an external welding mechanism for actually welding the pipe together. The external welding mechanism preferably shields the outside of the abutting ends 16 and 18 with argon gas so that the ends are completely surrounded by an inert environment. In the preferred embodiment, the welding mechanism uses a pulsed MIG technique (Metal Inert Gas) (5 to 10 times faster than TIG welding.

With particular reference to FIGURE 1, the internal pipe clamp 10 is formed of three major sections, including center section 22, nose cone 24 and rear frame 26. The nose cone 24 is removably bolted to the center section 22 by bolts 28. The rear frame 26 is removably bolted to the center section by bolts 30. Front wheels 32, lower rear wheels 34 and upper rear wheel 36 permit the clamp 10 to be pushed or pulled within the pipe sections along the length of the pipe sections with a reach rod 38. Also, the wheels support clamp 10 to prevent non-stainless steel portions of clamp 10 from contacting the walls of stainless steel pipe sections. If desired, wheel 36 can be powered by a pneumatic motor to drive the clamp 10 through the pipe sections. The reach rod 38 will be secured to the nose 40 on the nose cone 24 by a through bolt 42. The reach rod 38 has a sufficient length to extend out of the pipe sections being welded and can be grasped by an operator. Not only can the operator push and pull the clamp 10 with the reach rod, but the reach rod can be rotated along its elongate axis to rotate the nose 40, which is mounted on the nose cone 24 for rotation about the elongate axis of the clamp 10 to control the operation of clamp 10 as explained hereafter.

When used in welding a pipeline, the clamp 10 is advanced from the weld just completed to the open end of the pipeline by pulling the reach rod 38. Assuming, for example, that the first pipe section 12 is part of the pipeline, the clamp 10 will be advanced to the position shown in FIGURE 1 with the first set of clamping shoes 44 positioned to expand radially outward from the pipe clamp 10 to clamp against the inner periphery of the first pipe section 12 adjacent end 16. The lower rear wheels 34 are pivotally mounted on rear frame 26 and are positioned by wedges 46 moveable along the length of the pipe clamp 10 by threaded rods 48 so that the position of rear wheels 36 can be varied to cause the center line of the pipe clamp 10 to correspond with the center line of the first pipe section 12 at end 16 to ensure that the first set of clamping shoes 44 clamp against the first pipe section in the proper alignment.

The second pipe section 14 can then be passed over the reach rod 38, nose cone 24 and a portion of the center section 22, as illustrated in FIGURE 1, to the approximate abutting position with the first pipe section 12 for welding. As will be discussed in greater detail hereinafter, the second set of clamping shoes 50 can be moved radially outward to clamp the second pipe section 14 about the inner periphery thereof near the end 18, causing the abutting ends of the pipe sections to be aligned for welding. In many cases, the ends of the pipe sections will not have a precisely circular cross-section. The clamp 10 can actually deform the pipe into a circular cross-section at ends 16 and 18, as well as positioning the ends in alignment.

First seal 52 and second seal 54 can be expanded to seal between the pipe clamp 10 and the inner periphery of the first and second pipe sections 12 and 14 to isolate the enclosed volume 20 as seen in FIGURE 3. Once isolated, the enclosed volume 20 can be purged of oxygen by an inert gas, such as argon, for welding. Once the welding has been completed, the clamping shoes 44 and 50 can be retracted and the first and second seals 52 and 54 can be deflated to permit the pipe clamp 10 to be moved to the end of the pipeline to attach yet another pipe section.

With reference now to FIGURES 2 and 3, the operating mechanism of the first and second set of clamping shoes 44 and 50 will be described. Each mechanism for operating a set of clamping shoes is identical and the following description will apply to both mechanisms used in the pipe clamp 10. A frame 55 forms a portion of the center section 22 and supports double acting cylinders 56. A piston 58 is positioned within each cylinder for movement along the center axis of the pipe clamp 10. A piston rod 60 extends from the piston outside the cylinder 56 and is pivotally connected to a series of toggle links 62 at a first end of the links. The opposite end of each of the toggle links 62 is pivotally connected to one of the clamp shoes 64. The clamp shoes 64, in turn, are formed of a shoe portion 66, which actually contacts the inner surface of the pipe section, and a cylindrical shaft 68. Each shaft 68 slides along a guide 70 formed in the frame 55 so that the clamp shoes 64 are restricted to only radial motion relative to the center axis of the pipe clamp 10.

With reference to the mechanism for operating the second set of clamping shoes 50 as shown in FIGURES 2 and 3, when a pressurized fluid, such as compressed air, is entered on the right side of the piston 58, piston 58 and rod 60 move to the left along the center axis of the pipe clamp 10. This will cause the toggle links 62 to pivot about their attachment points with the piston rod 60 and individual clamp shoes 64 and cause the clamp shoes 64 to be moved radially outward to clamp against the inner surface of the pipe section 14. When the fluid pressure on the left side of the piston 58 is in excess of the fluid pressure on the right side, the piston will move to the right, causing the clamp shoes 64 to move radially inward and release the pipe section.

With reference now to FIGURES 1-3 and 5, the details of mounting the seals 52 and 54 will be described. The mounts for seals 52 and 54 are similar and the description of the mount for seal 54 will suffice to describe both. As best seen in FIGURE 5, an inner annular support plate 72 is bolted to the frame 55 by bolts 74. In the preferred embodiment, the support plate is formed of two semicircular halves for ease of installation and removal. A seal support 76 is bolted to the inner annular support plate 72 by a series of bolts 78. An outer annular support plate 80 is bolted to the seal support 76 on the opposite side of plate 72 by a series of bolts 82. On plate 80 proximate the nose cone 24, the bolts 82 are counter sunk to permit the nose cone 24 to bolt to the frame 55. Plate 80 used with seal 52 can use projecting bolts as the rear frame does not interfere. Plate 80 can be removed by undoing bolts 82 to replace a seal. As can be seen, the outer surface 84 of the seal support 76 and the inner surfaces 86 and 88 of the plates 72 and 80 support the second seal 54 on the pipe clamp 10.

Both the first seal 52 and second seal 54 are made of a resilient material and are formed with a hollow core 90. A valve stem 92 is provided to permit entry of or removal of pressurized air or other gas from the hollow core 90.

When the seals are non-inflated, i.e., no pressurized gas has been provided to the hollow core 90, the relaxed cross section of the seals are flattened as seen in dotted line in FIGURE 5. In this flattened state, the seal preferrably does not extend radially outward of the outer edges of the plates 72 and 80 to protect the seals. In the uninflated state, the internal pipe clamp 10 can be freely moved within pipe to the desired location. When pressurized air or other gas is fed into the hollow core 90, the pressure causes the seals to deform into a generally circular cross section, as seen in solid line in FIGURE 5, where the seals are urged into sealing contact with the outer surface 84 and the inner periphery of the annular pipe. When both the seals are inflated, the volume 20 is defined between the seals, the outer portion of frame 55, the clamping shoes 44 and 50 and the inner surface of pipe sections 12 and 14 at the abutting ends.

A hose nipple 94, seen in FIGURE 1, passes through plates 72 and 80 and seal support 76, seen in FIGURE 5, and opens into the lower portion of the enclosed volume 20 seen in FIGURES 2 and 3. A supply of argon or other inert gas can be supplied to the nipple 94 through a hose extending from an argon supply outside the pipe sections, along reach rod 38 and to nipple 94. Since argon is heavier than air, as the argon is forced into the enclosed volume 20, the argon will push the air out of the enclosed volume 20 through a bleed nipple 96 to the atmosphere. Preferably, the flow of argon into enclosed volume 20 will be continued throughout the weld, with argon escaping from volume 20 through nipple 96 and any leakage past unsealed bolts, etc. While seals can be provided between the shafts 68 and guides 70 to prevent argon leakage from the enclosed volume 20 by shafts 68, the close tolerances between the shafts and guides are believed adequate to minimize any loss encountered. Once argon has purged all the oxygen rich air from the enclosed volume 20, the weld can occur in the inert atmosphere.

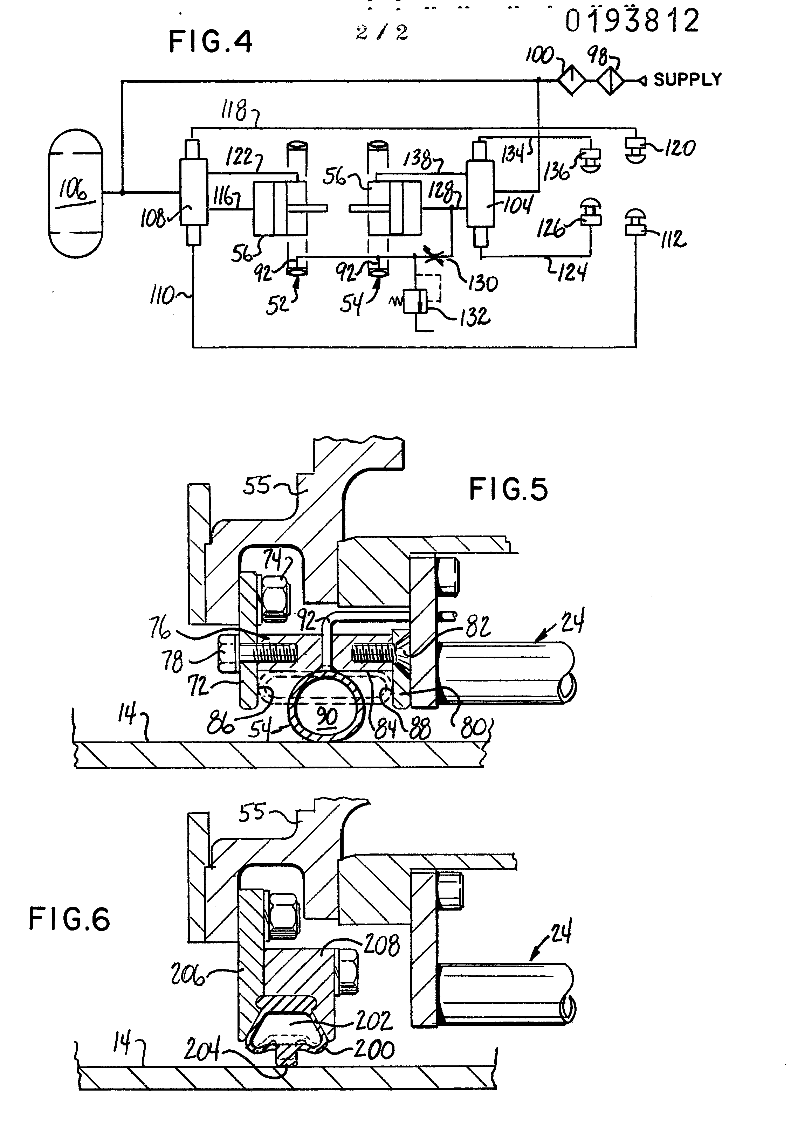

With reference now to FIGURE 4, the pneumatic control functions in the pipe clamp 10 will be described. Pressurized air is generally provided from a position outside the pipe sections being welded and routed through a hollow passage in the reach rod to the pipe clamp 10. The air supply is connected to an air filter 98 and air lubricator 100. The air supply is split at a tee, which provides pressurized air to the inlet of a four way valve 104 mounted in the nose cone 24 and to an auxiliary pressure tank 106 and four way valve 108 mounted on the rear frame 26.

The four way valve 104 controls the operation of the second set of clamping shoes 50 and the seals 52 and 54. The four way valve 108 operates the first set of clamping shoes 44. The pressure tank 106 is used to provide a large volume of air for rapid movement of the clamping shoes.

Four way valve 108 has a pilot port, connected to line 110, which cooperates with a button valve 112. When button valve 112 is depressed by twisting the reach rod so that lever 114 on the reach rod depresses the button valve 112, pressurized air is supplied through a main outlet port through line 116 to move the first set of clamping shoes 44 radially outward to clamp to the pipe section 12. Four way valve 108 also includes a pilot port, connected to line 118, which cooperates with a button valve 120. When button valve 120 is depressed by lever 114 when the reach rod is twisted in the opposite direction, air pressure is provided to a main outlet port through line 122 to retract the first set of clamping shoes 44. When pressurized air is provided to one of the main outlet ports, the other outlet port is opened to the atmosphere.

Four way valve 104 includes a pilot port, connected to line 124, which cooperates with a button valve 126. When lever 114 contacts button valve 126, pressurized air is provided at a main outlet port through line 128 to move the second set of clamping shoes 50 radially outward and to inflate the first and second seals 52 and 54. As shown in the drawings, a pressure regulator 130 and relief valve 132 are positioned in the line 128 between the outlet port and the seals, as the seals are inflated with less pressure than is necessary for operation of the clamping shoes. Four way valve 104 includes a pilot port, connected to line 134, which cooperates with a button valve 136 to provide pressurized air to a main outlet port through line 138 to retract the second set of clamping shoes 50. When pressurized air is provided to one main outlet port of four way valve 104, the other main outlet port is bled to the atmosphere so that when the second set of clamping shoes 50 are retracted, the air within the seals is permitted to escape to collapse the seals away from the inner wall of the pipe sections.

As noted previously, the first set of clamping shoes 44 is normally extended first to clamp the pipe clamp 10 within the first pipe section 12. The second set of clamping shoes 50 and seals 52 and 54 are then simultaneously extended to clamp to the second pipe section 14 and isolate the enclosed volume 20. To perform this sequence, the button valve 112 and button valve 126 are positioned so as the reach rod is rotated in a first direction, the button valve 112 is activated first. Continued rotation of the reach rod in the first direction then activates the button valve 126. In a similar fashion, the button valve 136 is activated first by the reach rod when the reach rod is rotated in the opposite direction to retract the second set of clamping shoes and the seals. Subsequent rotation in the opposite direction then activates the button valve 120 to retract the first set of clamping shoes 44.

With reference now to FIGURE 6, an alternate seal design is illustrated. In this design, a seal 200 of non-circular cross section is employed. The seal 200 has a hollow core 202 into which pressurized air can be admitted to move a seal face 204 into contact with the inner surface of a pipe section for sealing. The seal 200 is supported in a cradle formed of a first member 206, which is secured to the frame 55, and a member 208 bolted to member 206.

It will be understood that the internal pipe clamp 10 with seals 52 and 54 provides a significant improvement over past welding techniques. It has been observed that pipe clamp 10, used with the pulse MIG welding technique, can decrease the time necessary for preparation and welding of abutting pipe sections by a factor of 5 or 6 when compared with the previous TIG welding methods used with inflatable rubber donuts within the pipe. Clamp 10 is easier to position in place than the balloon seals used previously, and the clamps and seals are positioned in one step. In tests, the pipe clamp 10 has been found to completely purge oxygen from the enclosed volume 20 within about 30 seconds, far shorter than the 10 to 15 minutes needed for prior used techniques because of the smaller volume to be purged.

While only one embodiment of the present invention has been illustrated in the accompanying Drawings and described in the foregoing Detailed Description, it will be understood that the invention is not limited to the embodiment disclosed, but is capable of numerous rearrangements, modifications and substitutions of parts and elements without departing the spirit of the invention.

CLAIMS

1. An apparatus for use when welding the abutting ends of a first and second pipe, comprising:

a frame;

a first pipe clamping means mounted on said frame for engaging the first pipe about the inner periphery of the first pipe proximate the end to be welded;

a second pipe clamping means mounted on said frame for engaging the second pipe about the inner periphery of the second pipe proximate the end to be welded;

the first and second pipe clamping means for engaging the first and second pipes to align the abutting ends for welding; and

seal means mounted on said frame for forming a seal between the frame and the inner periphery of said first and second pipes to form an enclosed volume at the abutting ends of the pipe.

2. The apparatus of Claim 1 further comprising means for purging the oxygen from the enclosed volume.

3. The apparatus of Claim 1 wherein said seal means includes a first annular seal mounted on the frame for sealing between the first pipe and frame and a second annular seal mounted on the frame for sealing between the second pipe and frame, each of said first and second seals being formed of a resilient material and having a hollow core, said first and second seals further having means for entry and removal of a pressurized gas in the hollow core, the relaxed shape of the first and second seals permitting the apparatus to move within the pipe, entry of pressurized gas in the hollow core of said first and second seals deforming the first and second seals into sealing contact between the frame and pipes.

4. The apparatus of Claim 1 wherein said means for purging causes the oxygen in the enclosed volume to be purged by argon gas.

5.    An apparatus for use when welding abutting ends of a first and second pipe, comprising:

a frame for insertion within the pipes to be welded proximate the abutting ends;

a first set of clamping shoes mounted on said frame for radial motion between a retracted position to an extended position, the first set of clamping shoes clamping the apparatus to the first pipe about the inner periphery thereof proximate the abutting ends in the extended position;

a second set of clamping shoes mounted on said frame for radial motion between a retracted position to an extended position, the second set of clamping shoes clamping the apparatus to said second pipe about the inner periphery thereof proximate the abutting ends, the apparatus thereby clamping and aligning the first and second pipes for welding;

a first seal mounted on said frame on a first side of the abutting ends;

a second seal mounted on said frame on the opposite side of the abutting ends;

the first and second seals being formed of a resilient material and having a hollow core, the relaxed state of said first and second seals permitting the apparatus to move within the pipe, entry of a pressurized gas within the hollow core of the first seal deforming the first seal to form a seal between the inner surface of the first pipe and the frame and entry of pressurized gas in the hollow core of said second seal forming a seal between the inner surface of the second pipe and the frame, said first and second seals defining an enclosed volume between the frame and inner surface of the first and second pipes at the abutting ends;

means to purge the oxygen from said enclosed volume to provide an inert atmosphere at the abutting ends for welding.

6. The apparatus of Claim 5 wherein said means for purging provides argon gas into the lower portion of the enclosed volume to purge the oxygen from the upper portion of the enclosed volume.

7. The apparatus of Claim 5 further comprising means for moving the first set of clamping shoes to the extended position to clamp the first pipe and subsequently simultaneously moving the second set of clamping shoes to the extended position to clamp the second pipe and provided pressurized gas to the hollow cores of said first and second seals to seal between the frame and the inner surface of the first and second pipes.

8. A method for positioning abutting ends of a first and second pipe for welding and providing an inert atmosphere proximate the inner side of the abutting ends comprising the steps of:

positioning an apparatus within the interior of said first and second pipes proximate the abutting ends, said apparatus having a first set of clamping shoes for movement from a retracted position to an extended position to clamp the apparatus to a pipe and a second set of clamping shoes for movement between a retracted position and an extended position to clamp the apparatus to a pipe, the apparatus further having first and second seals, the seals in the relaxed state permitting the apparatus to move within the interior of the pipe and the seals in the inflated state sealing between the apparatus and the interior surface of a pipe;

clamping the apparatus and first pipe together by extending the first set of clamping shoes into contact with the interior surface of the first pipe proximate the abutting ends;

clamping the second pipe with the second set of clamping shoes by extending the second set of clamping shoes into contact with the inner surface of the second pipe proximate the abutting ends, the clamping of the second pipe aligning the first and second pipes for welding;

inflating the first seal to form a seal between the apparatus and the inner surface of the first pipe proximate the abutting ends and inflating the second seal to form a seal between the apparatus and the inner surface of the second pipe proximate the abutting ends to define an enclosed volume in the interior of the pipes proximate the abutting ends; and

purging oxygen from the enclosed volume to provide an inert atmosphere for welding.

9.   The method of Claim 8 further comprising the steps of:

deflating the first and second seals to permit the seals to return to their relaxed shape after welding; and

moving the first and second sets of clamping shoes to their retracted positions after welding so that the apparatus can be moved within the pipe.

FIG.1

FIG.2

FIG.3

FIG.4

SUPPLY

FIG.5

FIG.6